Europäisches Patentamt

European Patent Office

Office européen des brevets

(11) Publication number: **0 047 321**
**B1**

(12) **EUROPEAN PATENT SPECIFICATION**

(45) Date of publication of patent specification: **14.08.85**

(21) Application number: **81900548.9**

(22) Date of filing: **02.03.81**

(86) International application number:
**PCT/JP81/00041**

(87) International publication number:
**WO 81/02646 17.09.81 Gazette 81/22**

(51) Int. Cl.⁴: **G 11 B 5/70, C 09 D 3/727,**
**C 09 D 5/23, C 08 F 2/46**

(54) **MAGNETIC RECORDING MEDIUM.**

(30) Priority: **03.03.80 JP 26346/80**

(43) Date of publication of application:
**17.03.82 Bulletin 82/11**

(45) Publication of the grant of the patent:
**14.08.85 Bulletin 85/33**

(84) Designated Contracting States:
**FR**

(56) References cited:
**FR-A-2 359 186**
**GB-A-2 021 599**
**JP-A-47 015 104**
**JP-A-50 077 433**
**JP-A-54 036 907**
**JP-A-54 124 709**
**JP-B-47 012 423**
**JP-B-47 028 649**
**US-A-4 017 649**

(73) Proprietor: **TOYO INK Manufacturing Co., Ltd.**
**No. 3-13, Kyobashi 2-chome Chuo-ku**
**Tokyo (JP)**

(73) Proprietor: **TDK CORPORATION**
**13-1, Nihonbashi 1-chome**
**Chyuo-ku Tokyo (JP)**

(72) Inventor: **OHTSUKI, Akira**
**Toyo Ink Mfg Co. Ltd 3-13 Kyobashi 2-chome**
**Chuoku, Tokyo 104 (JP)**
Inventor: **KONNO, Ryozo**
**Toyo Ink Mfg Co. Ltd 3-13 Kyobashi 2-chome**
**Chuoku, Tokyo 104 (JP)**
Inventor: **SUGAI, Makio**
**Toyo Ink Mfg Co. Ltd 3-13 Kyobashi 2-chome**
**Chuoku, Tokyo 104 (JP)**
Inventor: **IMAOKA, Yasuo**
**TDK Electronics Co, Ltd 13-1, Nihonbashi 1-**
**chome**
**Chuo-ku, Tokyo 103 (JP)**
Inventor: **KUBOTA, Yuichi**
**TDK Electronics Co., Ltd 13-1, Nihonbashi 1-**
**chome**
**Chuo-ku, Tokyo 103 (JP)**
Inventor: **TANAKA, Kazushi**
**TDK Electronics Co., Ltd 13-1, Nihonbashi 1-**
**chome**
**Chuo-ku, Tokyo 103 (JP)**

Courier Press, Leamington Spa, England.

(74) Representative: **Holdcroft, James Gerald, Dr. et al**
**Graham Watt & Co. Riverhead**
**Sevenoaks Kent TN13 2BN (GB)**

# 0 047 321

**Description**

Technical field

This invention relates to a magnetic recording medium, such as magnetic tape, card, or disk, obtained by exposure to radiation.

Background art

Magnetic recording media in varied forms of cassette, open reel, and video tapes, and also as magnetic cards and disks, etc. are generally made today by coating a base of polyester, polyvinyl chloride, or polyacetate film, or sheet of paper with a coating material, printing ink, or other coating composition containing iron oxide or other magnetizable metal oxide or metallic material (a coating material being dealt with, by way of example, in the following description), and subjecting the coated film to further steps of orientation, drying, and, where necessary, curing. As a resin binder for the coating material, a vinyl chloride copolymer, polyurethane, polyacrylic ester, or sometimes an epoxy resin or the like is employed. It is also customary to add, according to the intended use of the end product, some plasticizer, rubber, dispersant, antistatic agent, pigment, and/or other additives.

While there is a wide choice of binders, a curing type binder, e.g., a thermosetting resin, is preferred because of its favorable effects upon the physical properties, such as resistances to wear, heat, and solvents, of the products. A routine practice with the tapes using thermosetting magnetic coating materials, e.g., video, hi-fi audio cassette, and computer tapes, magnetic disks, and endless tapes, has been to place the coated tapes in an oven for many hours (e.g., at 70°C for 2—20 hours) to bake the coats and attain better physical properties. This has, however, posed problems of tape deformations due to blocking of the coating material and tightness in winding and also deterioration of electrical characteristics due to unsmoothening of the magnetically coated surface.

For certain applications, it is common to use a primer in order to improve the adherence between the base film and the coating layer thereon or apply an overcoat to the magnetic coat so as to increase the wear resistance or the stability of the tape on repeated usage.

The present invention provides a magnetic recording medium capable of solving the foregoing problems.

Disclosure of the invention

Irradiation of the coating material according to the invention with electron beams or the like will cause the unsaturated double bonds in the coating to form radicals, which in turn will initiate polymerization to produce a magnetic coating film of a three-dimensional network structure and cure it instantaneously at a low temperature. In this way a smooth magnetic coating surface is obtained through a simple process without the necessity of after-curing, and some low-molecular component is dried, at the same time. Meanwhile, the use of a radiation-curable, high-molecular weight compound will give a coating film of good physical properties which is rigid and yet highly flexible. Thus, the present invention permits the manufacture of a magnetic tape with excellent dimensional stability, surface smoothness, and other properties within a short time by a simplified process, and is concerned with a magnetic recording medium which exhibits, in addition to the foregoing attributes, a superior adherence between the substrate and the coating layer thereon without the aid of a primer or the like. In brief, the magnetic recording medium of the invention is made by using (A) a compound having two or more radiation-curable, unsaturated double bonds and a molecular weight of not less than 5000, preferably not less than 8000, (B) a compound having one or more radiation-curable, unsaturated double bonds and a molecular weight of over 400 and less than 5000, preferably in the range of 600—3000, and (C) a compound having one or more radiation-curable, unsaturated double bonds and a molecular weight of less than 400, coating a substrate with a magnetic material composed essentially of a binder which is a mixture of the compounds (A) and (B) or of (A), (B), and (C), magnetic particles, and a solvent, predrying the coating, and then irradiating the coated matter with radioactive rays. Desirably, the compound (A) is one prepared by reacting either a partly saponified vinyl chloride-vinyl acetate copolymer or a vinyl chloride-vinyl alcohol copolymer, obtained by saponifying almost all of the acetyl groups of the vinyl chloride-vinyl acetate copolymer, with a polyisocyanate compound, and then reacting the resulting isocyanate-containing compound with an acrylic or methacrylic compound having a functional group reactive with the isocyanate group, and the compound (B) is one prepared by reacting a polyol with a polyisocyanate compound and then reacting the resulting isocyanate-containing compound with an acrylic or methacrylic compound having a functional group reactive with the isocyanate group. The mixing ratio of the compounds (A), (B), and (C) is such that the objective radiation-curable resin composition consists of 20—95 wt%, preferably 50—90 wt%, of (A), 5—80 wt%, preferably 10—50 wt%, of (B), and 0—50 wt%, preferably 5—20 wt%, of (C). This composition, when used together with an additional binder component which is a thermoplastic resin free of any radiation-curable, unsaturated double bond, will allow the resulting medium to retain well-balanced physical properties including flexibility.

As a magnetic coating material using an electron-beam-curable resin, the one according to Japanese Patent Application Public Disclosure No. 77433/1975 is known to the art. When a compound containing acrylic double bonds and having a molecular weight of more than 400 is employed singly, there will be a

3

tendency of decreased electron-beam curability because of the lower functional group density with an increase in molecular weight. Consequently, a large dose of radiation becomes necessary and the heat resistance tends to decline with less curability. The magnetic recording medium incorporating such a coating material, when served for practical use, will have troubles, such as improper running, inadequate durability, head choking, and dropouts. With regard to the flexibility of the cured coating layer, the higher the degree of filling of the magnetic material, the more brittle and the less wear resistant the magnetic coating layer will be. Further, with an increase in molecular weight, the viscosity of the coating material will increase, necessitating an increase in proportion of the solvent to be used for the dilution purpose. Also, the increased molecular weight material will undergo shrinkage in the course of coating film formation, resulting in reduced surface smoothness of the coating layer, roughening of the surface at the time of magnetic field orientation, and deteriorated coating adaptability. For the dispersibility of the magnetic particles, on the other hand, proper molecular weight and molecular weight distribution are desirable, and the electromagnetic conversion characteristics of the resulting magnetic coating layer will tned to depend on the dispersibility, surface smoothness, and orientation of the magnetic particles. As for the bonding, it is sometimes the case with the coating material that the bonding ability will drop with an increase in curability or will be insufficient where a high polymer alone is used.

On the other hand, an electron-beam-curable resin having a molecular weight of less than 400 will give a coating material with good electron-beam curability and satisfactory resistances to solvents and heat, but also with inadequate flexibility, wear resistance, dispersibility, coatability, and electrical characteristics. Thus, where a compound containing acrylic double bonds and having a molecular weight of more than 400 or less than 400 is used alone, it is difficult to obtain a magnetic coating material which is balanced and satisfactory in the varied properties required of a magnetic recording medium.

The above-mentioned compounds (A), (B), and (C) for use in the present invention, when adopted singly, will prove radiation curable but will not always give a magnetic coating material of good physical properties. It is by mixing the compounds (A), (B), and optionally (C) of different molecular weights that curability is attained even with a low dosage of about 1—3 mrads and many different physical property requirements can be met. Especially, the binders consisting of the (A)-(B) and (A)-(B)-(C) combinations are superior to the binder of the (A)-(C) combination in bonding ability, flexibility, etc.

For the purposes of the invention the term "radiation-curable, unsaturated double bonds" is used to mean the unsaturated couble bonds having radical polymerizability. They include acrylic double bonds of acrylic acid, methacrylic acid, and their ester compounds, ailylic double bonds as of diallyl phthalate, and unsaturated bonds as of maleic acid and maleic acid derivatives. Other unsaturated double bonds may be employed provided they are curable upon exposure to radiation. Of those, preferred are acrylic double bonds.

As the binder components (A), (B), and (C) for use in the present invention, the following compounds may be cited for examples:

I. Reaction products obtained by reacting a compound having at least one hydroxyl group in the molecule with one isocyanate group of a polyisocyanate compound, at a rate of one molecule of the former to one or more molecules of the latter, and then reacting the resultant with one or more molecules of a monomer having a group reactive with the isocyanate group and having radiation-curable unsaturated doubled bonds. Examples are the resins, prepolymers, oligomers, and telomers having two acrylic double bonds at the end of the molecule, prepared, e.g., by reacting one mole of a bifunctional polyether (marketed by Asahi Denka Kogyo K.K. under the trade designation "Adeka polyether P-1000"), obtained by adding propylene oxide to propylene glycol, with two moles of toluene diisocyanate and then with two moles of 2-hydroxyethyl methacrylate.

The compounds containing one or more hydroxyl groups and which may be employed here are, e.g., polyfunctional polyethers, such as "Adeka Polyether P-700", "Adeka Polyether P-1000", and "Adeka Polyether G-1500" (all made by Asahi Denka Kogyo K.K.) and "Polymeg 1000" and "Polymeg 650" (both made by The Quaker Oats Co.); cellulose derivatives, such as nitrocellulose, acetyl cellulose, and ethyl cellulose; hydroxyl-containing, partly saponified vinyl chloride-vinyl acetate copolymers and vinyl chloride-vinyl alcohol copolymers, such as "Vinylite VAGH" (made by Union Carbide Corp. of the U.S. and Sekisui Chemical of Japan under the trademark "A-5"); polyvinyl alcohols, polyvinyl formals; polyvinyl butyrals, polyfunctional polyesters, such as "Niax" polycarpolactone polyols "PCP-0200", "PCP-0240", and polyol "PCP-0300" (all made by UCC of the U.S.); saturated polyester resins prepared by the ester linkage of a saturated polybasic acid, such as phthalic, isophthalic, terephthalic, adipic, succinic, or sebacic acid, with a polyhydric alcohol, such as ethylene glycol, diethylene glycol, 1,4-butanediol, 1,3-butanediol, 1,2-propylene glycol, dipropylene glycol, 1,6-hexane glycol, neopentyl glycol, glycerin, trimethylolpropane, or pentaerythritol; and acrylic polymers containing at least one type of hydroxyl-containing acrylic or methacrylic esters as the polymer component.

Examples of the polyisocyanate compounds useful for the above purpose are 2,4-toluene diisocyanate, 2,6-toluene diisocyanate, 1,3-xylene diisocyanate, 1,4-xylene diisocyanate, m-phenylene diisocyanate, p-phenylene diisocyanate, hexamethylene diisocyanate, isophorone diisocyanate, "Desmodur L", and "Desmodur IL" (both made by Farbenfabriken Bayer AG of West Germany).

The monomers having groups reactive with the isocyanate group and also having radiation-curable, unsaturated double bonds include; hydroxyl-containing esters, such as 2-hydroxyethyl ester, 2-hydroxypropyl ester, and 2-hydroxyoctyl ester, of acrylic and methacrylic acids; monomers having active hydrogen reactive with the isocyanate group and also having acrylic double bonds, such as acrylamide, methacrylamide, and N-methylolacrylamide; and monomers having active hydrogen reactive with the isocyanate group and also containing radiation-curable, unsaturated double bonds, such as allyl alcohols, maleic acid esters of polyhydric alcohols, and mono- and diglycerides of long-chain fatty acids having unsaturated double bonds.

II. Reaction products of a compound having at least one epoxy group in the molecule and a monomer having groups reactive with the epoxy group and also having radiation-curable, unsaturated double bonds, at a rate of one molecule of the former to one or more molecules of the latter. Examples are the resins, prepolymers, and oligomers which carry acrylic double bonds in pendant fashion in the molecules, obtained by radical polymerization of glycidyl methacrylate and a further reaction of the resulting epoxy-containing thermoplastic resin with acrylic acid, thereby effecting a ring-opening reaction of the carboxyl and epoxy groups. Also included are the resins, prepolymers, and oligomers having radiation-curable, unsaturated double bonds in the molecular frame as a result of the ring-opening reaction of the carboxyl and epoxy groups due to a reaction of the epoxy-containing thermoplastic resin with maleic acid.

The compounds containing one or more epoxy groups in the molecule include homopolymers of epoxy-containing acrylic ester or methacrylic ester, such as glycidyl acrylate and glycidyl methacrylate, or their copolymers with other polymerizable monomers, such as "Epikote 828", "Epikote 1001", "Epikote 1007", and "Epikote 1009" (all made by Shell Chemical Co.). Various other types of epoxy resins may also be employed.

Among the monomers having the group reactive with the epoxy group and also having radiation-curable, unsaturated double bonds are carboxyl-containing acrylic monomers, such as acrylic and methacrylic acids, and acrylic monomers having primary or secondary amino groups, such as methylaminoethyl acrylate and methylaminoethyl methacrylate. In addition, polybasic acid monomers having radiation-curable, unsaturated double bonds, such as maleic, fumaric, crotonic, and undecylenic acids, may be used.

III. Reaction products of a compound containing at least one carboxyl group in the molecule and a monomer having groups reactive with the carboxyl group and also having radiation-curable, unsaturated double bonds, at a rate of one molecule of the former to one or more molecules of the latter. Examples are the resins, prepolymers, and oligomers obtained by solution polymerization of methacrylic acid and a reaction of the resulting carboxyl-containing thermoplastic resin with glycidyl methacrylate, and further introduction of acrylic double bonds into the molecules, in the same manner as in Section II above, by the ring-opening reaction of carboxyl and epoxy groups.

The compounds that contain one or more carboxyl groups in the molecule are the polyesters containing carboxyl groups in the molecular chain or at the end of a chain in the molecule; the homopolymers of monomers having the radical polymerizability and containing carboxyl groups, such as acrylic acid, methacrylic acid, maleic anhydride, and fumaric acid; and their copolymers with other polymerizable monomers.

The monomers that have the groups reactive with the carboxyl groups and have radiation-curable, unsaturated double bonds are glycidyl acrylate, glycidyl methacrylate, etc.

IV. Polyester compounds containing radiation-curable, unsaturated double bonds in the molecular chain. They may include, e.g., the unsaturated polyester resins formed by the ester linkage of a polybasic acid and a polyhydric alcohol, mentioned in I above, part of the polybasic acid being maleic acid, and containing radiation-curable, unsaturated double bonds; and prepolymers and oligomers of those resins.

The polybasic acid and polyhydric alcohol components of the saturated polyester resins may be the compounds referred to in I above, and examples of the radiation-curable, unsaturated double bonds are maleic acid and fumaric acid.

The radiation-curable, unsaturated polyester resins are prepared by adding maleic acid, fumaric acid or the like to at least one polybasic acid component and at least one polyhydric alcohol component, and treating the mixture in the usual manner, i.e., effecting a dehydration or dealcoholization reaction in the presence of a catalyst and in a nitrogen atmosphere at 180°—200°C, and increasing the temperature to the range of 240°—280°C, and then subjecting the resultant to a condensation reaction under a reduced pressure of 0.5—1 mmHg. In this way the objective polyester resin is obtained. The product may contain maleic acid, fumaric acid or the like in the range of 1—40 mol%, preferably 10—30 mol%, on the basis of the total acid quantity, depending on the cross-linking condition during the manufacture, radiation curability and other properties of the product.

V. Low-molecular compounds having radiation-curable, unsaturated double bonds may also be employed according to the intended uses. Examples of such low-molecular compounds are styrene, ethylacrylate, ethylene glycol diacrylate, ethylene glycol dimethacrylate, diethylene glycol diacrylate, diethylene glycol dimethacrylate, 1,5-hexane glycol diacrylate, 1,6-hexane glycol dimethacrylate, trimethylolpropane triacrylate, and trimethylolpropane trimethacrylate. (The compounds in the Section V. mostly fall under the category of the compounds (C)).

In the present invention the compounds referred to in Sections I through V may be employed as components of a binder for magnetic coating material. Thus, a mixture of (A) a compound having two or more radiation-curable unsaturated bonds and a molecular weight of not less than 5000, preferably not less than 8000, (B) a compound having a radiation-curable, unsaturated double bonds and a molecular weight of over 400 and less than 5000, preferably in the range of 600—3000, and (C) a compound having a radiation-curable, unsaturated double bonds and a molecular weight of less than 400, in a mixing ratio (% by weight) of 20—95, preferably 50—90 (A), 5—80, preferably 10—50 (B), and 0—50, preferably 5—20 (C), is used. Where the compound (A), having a molecular weight of 5000 or more, preferably 8000 or more, is an all the flexible compound, e.g., "Vinylite VAGH" or the like which is a partly saponified vinyl chloride-vinyl acetate copolymer, it will impart flexibility to the coating material but will prove somewhat inferior in radiation curability and adhesion to the base. The singular use of the compound (A) will present other problems, such as increased viscosity of the magnetic coating material. Then, lower-molecular compounds excellently compatible with the component (A) are used as the components (B) and (C), if (C) is present, so was to increase the cross-linking density, improve radiation curability, and impart good adhesion to the substrate. The use of such low-molecular weight compounds will lower the viscosity and improve the coatability of the magnetic coating material, further improving the dispersibility of the magnetic particles in the coating composition. Where a compound incapable of imparting excellent flexibility is used as the component (A), compounds capable of conferring radiation curability and adhesion to the base on the coating material and which are satisfactorily compatible with the component (A) may be mixed with it as the components (B) and (C), if (C) is present. If they are plastic they can give flexibility to the cured coating film. Any combination of compounds both exceeding 5000 in molecular weight would not produce such an improved radiation curability as by a low-molecular weight compound or compounds. Moreover, the high-molecular combination would make the magnetic coating material too viscous for smooth, trouble-free application. For these reasons the component (A) must be combined with a compound or compounds less than 5000 in molecular weight, such as (B) and optionally (C). When the component (A) alone is employed, it will be impossible to obtain adequate radiation curability and other desirable physical properties, as already noted above. Hence the component (B) and optionally the component (C) is required, preferably 10 or more % by weight (B) and, if (C) is present, 5 or more % by weight (C). If the component (B) exceeds 80 wt%, or if the component (C) exceeds 50 wt%, the magnetic coating material will have poor flexibility, dispersibility, etc., failing to meet various other physical property requirements.

According to the present invention, it is possible to improve the radiation curability and flexibility by using a compound having only one unsaturated double bond instead of two or more as the component (B) or and optional component (C).

Also, under the invention, a partly saponified vinyl chloride-vinyl acetate copolymer having a molecular weight of 5000 or more, preferably 8000 or more, into which radiation curable, unsaturated double bonds have been introduced may be used as the component (A), and a polyol having a molecular weight of not less than 400 and less than 5000, preferably in the range of 600—3000, incorporating a radition-curable, unsaturated double bond or bonds may be used as the component (B), and the two may be mixed in an A:B ratio (by weight) in the range from 20:80 to 95:5, preferably from 50:50 to 80:20, to prepare a binder. Then, an exposure to a low dosage of 3 mrads or less will be effective enough to give a magnetic recording medium excellent in radiation curability adhesion to the base, and the other physical properties required of the medium. In order to balance the flexibility and other properties of the product, the binder according to the invention may contain as an additional component a thermoplastic resin free from any radiation-curable, unsaturated bond. Among useful thermoplastic resins for this purpose are vinyl chloride-vinyl acetate copolymer and other vinyl chloride resins, polyester resins, polyvinyl alcohol resins, epoxy resins, cellulose derivatives, thermoplastic polyurethane resins, polyamide resins, and acrylic resins. The addition of such a thermoplastic resin is effective in balancing flexibility and other properties of the product. In practice of the invention a solvent is employed. When the magnetic particles-to-binder ratio (by weight) is controlled within the range from 85:15 to 65:35 in view of the magnetic properties and the bonding ability required of the coating layer to be formed on the base layer, the solvent is used to adjust the solids content of the magnetic coating material in the range of 20—60 wt%, preferably of 25—40 wt%. In this way a magnetic coating material with desirable application properties can be obtained.

The is no special limitation to the solvent, and a suitable one may be chosen in consideration of the binder solubility, compatibility, etc. It may, for example, be a ketone, such as as acetone, methyl ethyl ketone, methyl isobutyl ketone, or cyclohexanone; an ester, such as ethyl formate, ethyl acetate, or butyl acetate; an alcohol such as methanol, ethanol, isopropanol, or butanol; an aromatic hydrocarbon, such as toluene, xylene or ethylbenzene; an ether, such as isopropyl ether, ethyl ether, or dioxane; or a furan, such as tetrahydrofuran or furfural. These are used as either a single solvent or mixed solvent.

Predrying is effected primarily for the removal of the solvent by heating or other suitable means.

The substrate to be coated with the magnetic coating material in accordance with the present invention may be the polyethylene terephthalate film that is in wide use as a base material for magnetic recording media. Where heat resistance is an important consideration, a polyimide film polyamide film or the like may be utilized. In the case of a polyester film as a thin base, it is often used after monoaxial or biaxial orienting. Other applications include coating of paper.

The magnetic particles which may be used in the present invention are acicular or granular $\gamma$-$Fe_2O_3$, $Fe_3O_4$, Co-doped $\gamma$-$Fe_2O_3$, Co-doped $\gamma$-$Fe_2O_3$—$Fe_3O_4$ solid solution, Co-base-compound-adsorbed $\gamma$-$Fe_2O_3$, and Co-base-compound-adsorbed $Fe_3O_4$ (including those oxidized to an intermediate state between itself and $\gamma$-$Fe_2O_3$). (The term "Co-base compound" as used herein means cobalt oxide, cobalt hydroxide, cobalt ferrite, cobalt ion-adsorbates and the like which enable the magnetic powder to take advantage of the magnetic anisotropy of cobalt in improving its coercive force). Also, the magnetic powder consisting essentially of a ferromagnetic metal element or alloy, such as Co, Fe-Co, Fe-Co-Ni, Co-Ni, or the like may be suitably employed. Such a fine magnetic powder is prepared in a number of ways, including wet reduction of the starting material with a reducing agent such as $NaBH_4$, a treatment of the iron oxide surface with a Si compound and subsequent dry reduction with $H_2$ gas or the like, and vaccum evaporation in a low-pressure argon gas stream. Fine particles of monocrystalline barium ferrite may be employed as well. The fine magnetic powder is used in the form of acicular or granular particles, depending on the application of the resulting magnetic recording medium.

In the field of high-bias hi-fi sound cassette tapes, video cassette tapes, video tapes, master tapes for contact transfer printing and the like, the technical progress in recent years has been striking, and the market is fast growing. As a new addition to this field, a high-performance tape possessing both extremely desirable electromagnetic conversion characteristics and physical reliability has now been provided, in accordance with the present invention, by combining a radiation-curable binder with a fine magnetic powder, especially a cobalt-modified acicular iron oxide (cobalt-doped or Co-base-compound-coated type) advantageous for high-density recording applications or with acicular fine alloy particles having even greater coercive force.

For the magnetic coating material of the invention, it is advisable to use various additives usually employed for these applications, such as an antistatic agent, lubricant, dispersant, sensitizer, leveling agent, wear-resisting agent, and film-reinforcing agent, to suit the particular end use.

The radioactive rays for use in cross-linking and curing of the magnetic coating film according to the invention may be electron beams from an electron-beam accelerator as the source, gamma rays from Cobalt-60, X-rays from an X-ray generator. The use of electron-beams from an electron-beam accelerator is particularly advantageous in view of the ease of controlling the absorbed dose, introduction into the process line, shield from the ionizing radiation, etc.

With regard to the characteristics of electron beams for use in curing the magnetic coating film, it is desirable from the standpoint of transmissivity to adopt an electron-beam accelerator which operates with an acceleration voltage of 100—750 KV, preferably 150—300 KV, and effect the irradiation so that the absorbed dose may be in the range of 0.2—20 mrads.

In the case of a magnetic tape, in particular, the film of coating to be cured is thin, and therefore the adoption of the low-dosage electron-beam accelerator made by Energy Science Inc. of the U.S. ("Electro-curtain system") or the equivalent is extremely advantageous because of the ease with which the accelerator can be installed on the tape coating line and the shield can be established against secondary X-rays inside the apparatus.

Of course, the Van de Graff accelerator in extensive use as an electron-beam accelerator may be employed instead.

In radiation curing, exposure of the magnetic coating film to radiation in a stream of $N_2$, He, or other inert gas is important. A film of magnetic coating, which is very thickly filled with a magnetic pigment, is highly porous in structure. When it is exposed to electron beams in air, $O_3$ and the like produced by the irradiation for the cross-linking of the binder components will have an adverse effect, keeping the radicals formed in the polymer from effectively acting for the cross-linking reaction. The adverse effect is exercised not merely on the surface of the magnetic coating layer but also deep into the porous film, thus hampering the cross-linking of the binder. For this reason it is essential to maintain an inert gas atmosphere of $N_2$, He, $CO_2$, or the like around the portion to the irradiated.

Brief description of the drawings

Fig. 1 is a graph showing the relation between the holding time of a magnetic coating after application until the surface smoothening treatment and the video (RF) sensitivity of the resulting video tape at 4 MHz;

Fig. 2 is a graph showing the rates of attenuation of signals with respect to the reproduction output, as measured by recording signals on the video tape specimens by a video tape recorder and then by reproducing the still images with a tension applied on the take-up side by a spring balancer;

Fig. 3 is a graphic representation of changes in tension on the take-up side of test video tapes with time of running on a video tape recorder; and

Fig. 4 is a graph showing the attenuation ratio of the peak voltages of reproduction outputs with repeated passes of sealless commutation tickets through a gate.

Best mode of carrying out the invention

Next, the present invention is illustrated by the following examples and comparative examples. Throughout these examples the "parts" are all by weight.

Before proceeding to the examples, typical methods of synthesizing resins for use in the invention will be explained below:

Synthesis of resin (a)

One hundred parts of a copolymer having a molecular weight of 18000, composed of vinyl chloride, vinyl acetate, and vinyl alcohol in a ratio of 93:2:5% by weight is dissolved by heating together with 238 parts of toluene and 95 parts of cyclohexanone. The temperature of the solution is raised to 80°C, 7.5 parts of a tolylene diisocyanate (TDI) adduct to be described later is added, and also 0.002 part each of tin octylate and hydro-quinone quinone are added, and then the whole mixture is reacted in an $N_2$ gas stream at 82°C until an isocyanate (NCO) reaction rate of over 90% is attained. Following the conclusion of the reaction, the resultant is cooled and diluted with 238 parts of methyl ethyl ketone. The resin composition thus obtained, designated (a), has a molecular weight of 19200.

(Synthesis of a TDI adduct)

In an $N_2$ stream within a one-liter, four-necked flask, 348 parts of tolylene diisocyanate (TDI) is heated to 80°C, and then 260 parts of 2-hydroxyethyl methacrylate (2HEMA), 0.07 part of tin octylate, and 0.05 part of hydroquinone are added dropwise while the temperature inside the reactor is being controlled to be within the range of 80°—85°C. After the addition, the mixture is stirred at 80°C for 3 hours to conclude the reaction. Following the conclusion of the reaction, the product is taken out and cooled. In this way a white paste of a 2HEMA adduct of TDI was obtained.

Synthesis of resin (b)

One hundred parts of a butyral resin (a copolymer having a molecular weight of 33800 composed of butyral, acetal, and vinyl alcohol groups in a ratio of 42:20:35 wt%) is dissolved with heat in 200 parts each of toluene and methyl isobutyl ketone. The solution is heated to 80°C, 12.8 parts of the ame TDI adduct as used in the synthesis of the resin (a) is added, and, with the further addition of 0.026 part tin octylate and 0.002 part hydroquinone, the whole mixture is reacted in an $N_2$ gas stream at 80°C until an NCO reaction rate of over 90% is attained.

After the reaction, the resultant is cooled and diluted with 238 parts of methyl ethyl ketone to obtain a resin (b). The molecular weight of this resin is 42000.

Synthesis of resin (c)

One hundred parts of a saturated polyester resin (marketed by Dynamite Nobel Co. under the trade designation "L-411") is dissolved with heat in 116 parts each of toluene and methyl ethyl ketone. The temperature of the solution is increased to 80°C, and 284 parts of an isophorone diisocyanate synthesized generally in the same way as in the synthesis of the resin (a). With the further addition of 0.006 part each of tin octylate and hydroquinone, the resultant is reacted in an $N_2$ gas stream at 80°C to achieve an NCO reaction rate of more than 90%.

The resin composition thus obtained is designated (c). The molecular weight of this resin is 20600.

Synthesis of resin (d)

A reaction vessel is charged with 291.2 parts each of dimethyl terephthalate and dimethyl isophthalate, 64.8 parts of dimethyl maleate, 251.2 parts of ethylene glycol, 364.8 parts of 1,4-butanediol, 81.2 parts of 1,3-butanediol, and 4.0 parts of tetra-n-butyl titanate. After a demethanolizing reaction at 180°C in an $N_2$ stream, the resultant is heated to 240°—260°C and subjected to a condensation reaction under a reduced pressure of 0.5—1 mmHg. In this manner a linear unsaturated polyester resin with a molecular weight of 8000 was obtained.

Synthesis of resin (e)

Twenty parts of glycidyl methacrylate, 30 parts of butyl acrylate, and 37.5 parts each of toluene and methyl isobutyl ketone are placed in a reaction vessel, and heated altogether to 80°C. Next, 60 parts of glycidyl methacrylate, 90 parts of butyl acrylate, 6 parts of benzoyl peroxide, and 112.5 parts each of toluene and methyl isobutyl ketone are added dropwise, and the mixture is caused to react at 80°—90°C for 4 hours. After the addition and dissolution of 1.25 parts of triethanolamine and 0.5 part of hydroquinone, 40 parts of acrylic acid was further added dropwise, and then the mixture was allowed to react at the same temperature as above until an acid value of 5 or less was reached. The resin composition so obtained is designated (e). The molecular weight of this resin is 15000.

Synthesis of resin (f)

Ten parts of 2-hydroxyethyl methacrylate, 40 parts of butyl acrylate, and 37.5 parts each of toluene and methyl isobutyl ketone are placed in a reaction vessel, heated to 80°C, and then 30 parts of 2-hydroxyethyl methacrylate, 120 parts of butyl acrylate, and 8 parts of benzoyl peroxide as a polymerization initiator are dissolved in 112.5 parts each of toluene and methyl isobutyl ketone, and the solution is added dropwise. The whole mixture is reacted at 80°—90°C for 4 hours. To 330 parts of the reaction product are added 44 parts of a TDI-allyl alcohol adduct synthesized generally in the same manner as the TDI adduct of the resin

8

**0 047 321**

(a). Then, in the presence of 0.012 part each of tin octylate and hydroquinone, the whole mixture is reacted at 80°C up to an NCO reaction rate in excess of 90%. The resulting resin composition is designated (f). Its molecular weight is 15000.

Synthesis of resin (g)

A reaction vessel is charged with 250 parts of "Adeka Polyether P-1000" (a polyether marketed by Asahi Denka Kogyo Co.), 65 parts of 2-hydroxyethyl methacrylate, 0.013 part of hydroquinone, and 0.017 part of tin octylate. The charge is dissolved with heat 87.0 parts of TDI is added dropwise, while being cooled so that the temperature inside the vessel is kept within the range of 80°—90°C, and, following the conclusion of dropping, the mixture is reacted until an NCO reaction rate of over 95% is achieved. The resin composition thus obtained is designated (g). The molecular weight of the resin is 1610.

Synthesis of resin (h)

A reaction vessel is charged with 250 parts of "Niax Polyol PCP-0200" (a polycaprolactone made by Chisso Corp.), 122.2 parts of 2-hydroxyethyl methacrylate, 0.024 part of hydroquinone, and 0.033 part of tin octylate. After the dissolution of the contents by heating to 80°C, 163.6 parts of TDI is dropped while being cooled so as to maintain a temperature of 80°—90°C inside the vessel. Following the conclusion of dropping, the mixture is reacted at 80°C up to an NCO reaction rate of over 95%. The resin composition obtained is designated (h). The molecular weight of the resin is 1140.

Synthesis of resin (i)

In 25 parts each of toluene and methyl ethyl ketone is dissolved 200 parts of "Epikote 828" (an epoxy resin made by Shell Chemical) with the application of heat. Then, 2.7 parts of N,N-dimethylbenzylamine and 1.4 parts of hydroquinone are added to the solution, the mixture is heated to 80°C, and 69 parts of acrylic acid is added dropwise. The whole mixture is reacted at 80°C until an acid value of less than 5 is reached. The resulting resin composition is designated (i), and its molecular weight is 500.

Example 1

A composition consisting of

| | |
|---|---|
| Cobalt-adsorbed acicular $\gamma$-$Fe_2O_3$ (major axis 0.4 $\mu$, minor axis 0.05 $\mu$, Hc 600 Oe) | 120 parts |
| Carbon black (for anistatic use made by Mitsubishi Chemical Ind.) | 5 parts |
| $\alpha$-$Al_2O_3$ powder (0.5 $\mu$ in particle size) | 2 parts |
| Dispersant (lecithin purified from soybean oil) | 3 parts |
| Solvent (methyl ethyl ketone:toluene 50:50) | 100 parts |

is mixed on a ball mill for 3 hours, so that the acicular magnetic iron oxide particles are thoroughly wetted with the dispersant.

Next, as a binder, a mixture consisting of

| | |
|---|---|
| Resin composition (a) | 15 parts (on solids basis) |
| Resin composition (g) | 15 parts (on solids basis) |
| Solvent (methyl ethyl ketone:toluene 50:50) | 200 parts |
| Lubricant (higher fatty acid-modified silicone oil) | 3 parts |

is mixed well and dissolved.

The solution is placed into the ball mill already used for the treatment of the magnetic powder, and the two are again mixed and dispersed for 42 hours.

The magnetic coating material thus obtained was applied to a 15 $\mu$-thick polyester film, magnetically oriented on a (1600-gauss) permanent magnet, and the solvent was dried away by an infrared lamp or hot air. The coating surface was smoothened and the film was hardened by irradiation with electron beams in an $N_2$ gas atmosphere by ESI's "Electro-curtain" type electron-beam accelerator at an acceleration voltage of 150 KeV with an electrode current of 20 mA to a total dosage of 10 mrads.

The tape thus obtained was slitted into a ribbon 1/2-in. wide as a video tape (Specimen #1). The

9

cross-linking of the magnetic film by the procedure described is understood to have resulted from the combination of cross-linking by radicalization of the acrylic double bonds and cross-linking by the radicals formed in the molecular chains of the vinyl chloride-vinyl acetate resin (possibly due to HCl removal but yet to be clarified).

Example 1-1 (using a thermoplastic resin, too)

The procedure of Example 1 was repeated with the exception that the binder was a mixture consisting of

| | |
|---|---|
| Vinyl chloride-vinyl acetate copolymer (Union Carbide Corp.'s "VAGH") | 6 parts |
| Resin Composition (a) | 12 parts (on solids basis) |
| Resin composition (g) | 12 parts (on solids basis) |
| Solvent (methyl ethyl ketone:toluene 50:50) | 200 parts |
| Lubricant (higher fatty acid-modified silicon oil) | 3 parts |

and, in the same way as in Example 1, the coating film was cured and a video tape (Specimen #1-1) was obtained from the resulting tape.

Example 2

A composition consisting of

| | |
|---|---|
| Cobalt-adsorbed acicular $\gamma$-Fe$_2$O$_3$ (major axis 0.4$\mu$, minor axis 0.05$\mu$; Hc 600 Oe) | 120 parts |
| Carbon black (for antistatic use) | 5 parts |
| $\alpha$-Al$_2$O$_3$ powder (0.5 $\mu$ in particle size) | 2 parts |
| Dispersant (lecithin purified from soybean oil). | 3 parts |
| Solvent (methyl ethyl ketone:toluene 50:50) | 100 parts |

is mixed on a ball mill for 3 hours, so that the acicular magnetic iron oxide particles are thoroughly wetted with the dispersant.

Next, a binder mixture consisting of

| | |
|---|---|
| Resin composition (c) | 20 parts (on solids basis) |
| Resin composition (h) | 10 parts (on solids basis) |
| Solvent (methyl ethyl ketone:toluene 30:50) | 200 parts |
| Lubricant (higher fatty acid-modified silicone oil) | 3 parts |

is mixed well and dissolved.

The resultant is placed into the ball mill where the magnetic powder has been treated in advance, and the two are again mixed and dispersed for 42 hours.

The magnetic coating material thus obtained was applied to a 15 $\mu$-thick polyester film, magnetically oriented on a (1600-gauss) permanent magnet, and the solvent was dried away by an infrared lamp or hot air. The coating surface was smoothened and the film was hardened by irradition with electron beams in an N$_2$ gas atmosphere by ESI's "Electro-curtain" type radiation accelerator at an acceleration voltage, of 150 KeV with an electrode current of 20 mA to a total dosage of 10 mrads.

The tape thus obtained was slitted into into a ribbon 1/2-in. wide as a video tape (Specimen #2).

# 0 047 321

Comparative Example 1-1

In Example 1, the binder was replaced by a mixture consisting of

| | |
|---|---|
| Resin composition (a) | 24 parts (on solids basis) |
| Diethylene glycol diacrylate | 6 parts |
| Solvent (methyl ethyl ketone:toluene 50:50) | 200 parts |
| Lubricant (higher fatty acid-modified silicone oil) | 3 parts |

but otherwise in the same manner as in Example 1, the coating film was cured, and a video tape (Specimen #A-1) was obtained from the resulting tape.

Comparative Example 1-2

In Example 2, the binder was replaced by a mixture consisting of

| | |
|---|---|
| Resin composition (h) | 20 parts (on solids basis) |
| Trimethylolpropane triacrylate | 10 parts |
| Solvent (methyl ethyl ketone:toluene 30:50) | 200 parts |
| Lubricant (higher fatty acid-modified silicone oil) | 3 parts |

but otherwise in the same manner as in Example 2, the coating film was cured, and a video tape (Specimen #A-2) was obtained from the resulting tape.

Comparative Example 2-1

A composition consisting of

| | |
|---|---|
| Cobalt-adsorbed acicular $\gamma$-Fe$_2$O$_3$ (major axis 0.4 $\mu$ minor axis 0.05 $\mu$, Hc 600 Oe) | 120 parts |
| Carbon black (for antistatic use, "Mitsubishi Carbon Black MA-600") | 5 parts |
| $\alpha$-Al$_2$O$_3$ powder (0.5 $\mu$ in particle size) | 2 parts |
| Dispersant (lecithin purified from soybean oil) | 3 parts |
| Solvent (methyl ethyl ketone:toluene 50:50) | 100 parts |

is mixed on a ball mill for 3 hours, and the acicular magnetic iron oxide particles are thoroughly wetted with the dispersant. Next, a mixture consisting of

| | |
|---|---|
| Vinyl chloride-vinyl acetate copolymer (Union Carbide's "VAGH") | 15 parts |
| Thermoplastic urethane resin (Nippon Polyurethane Ind.'s "Nippollan 3022") | 15 parts |
| Solvent (methyl ethyl ketone:toluene 50:50) | 200 parts |
| Lubricant (higher fatty acid-modified silicone oil) | 3 parts |

is mixed well and dissolved.

The resultant is placed into the ball mill where the magnetic powder has been treated in advance, and the two are again dispersed for 42 hours.

After the dispersion, 5 parts by weight, (on solids basis) of an isocyanate compound ("Desmodur L" made by Bayer AG) capable of cross-linking by a reaction with the functional groups composed mostly of

11

# 0 047 321

the hydroxyl groups of the binder in the magnetic coating material is added to the coating composition already charged in the ball mill, and the mixture is kneaded for 20 minutes.

The magnetic coating material thus obtained was applied to a 15 µ-thick polyester film, magnetically oriented on a (1600-gauss) permanent magnet, and the solvent was dried away by an infrared lamp or hot air. The coating surface was smoothened and the film roll was held in an oven at 80°C for 48 hours to promote the cross-linking reaction with the isocyanate. The resulting tape was slitted into a 1/2-in. wide ribbon as a video tape (Specimen #A).

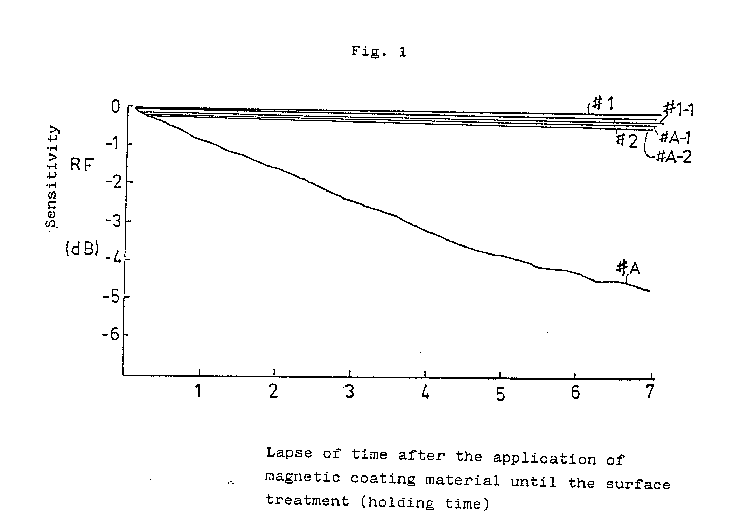

Fig. 1 shows changes in the video sensitivity (RF sensitivity) levels at 4 MHz of test video tapes with holding time in the course of video tape making, from the application of the magnetic coating material to the surface smoothening of the resulting film at 25°C. For the sensitivity measurement, the output at 4 MHz of a video tape just smoothened on the surface immediately after the coating is fixed to be zero decibel, and the subsequent changes in surface processability with time were followed. The video tape recorder employed for the testing purpose was of the VHS type manufactured by Matsushita Electric.

In the case of the conventional tape made by a cross-linking reaction with heat of an isocyanate compound, the isocyanate compound added as a curing agent to the coating material will start its reaction with the hydroxyl groups and the like in the binder. After the application and drying of the coating material, the cross-linking reaction in the binder proceeds rapidly. As represented by Specimen #A, the curing of the coating film progresses due to the cross-linking reaction with the lapse of time after the application, and the video sensitivity tends to decline with a decrease in the surface-forming ability.

On the other hand, with video tapes of the invention, Specimens #1 and #2, there occurred no deterioration in video sensitivity due to a decrease of the surface-forming ability with the holding time after the application of the magnetic coating material, because the cross-linking by the radicals formed by the irradiation with electron beams proceeds after the surface forming. This turned to be unrelated to the pot life of the magnetic coating material before the application, and thus the limitation to the ordinary process of making a tape of the thermosetting type could be eliminated.

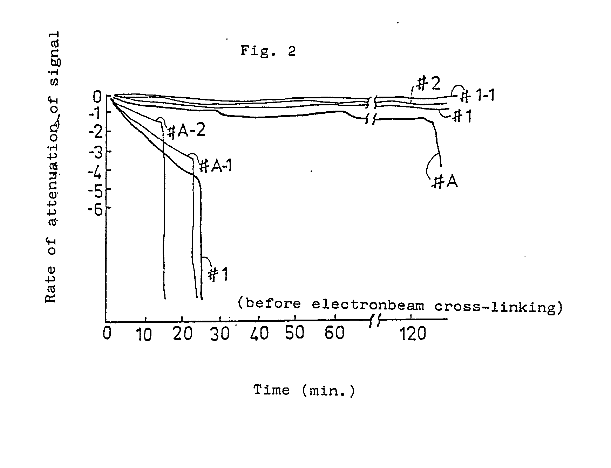

Fig. 2 is a graph showing the rates of attenuation (on still reproduction) of signals with respect to the reproduction output, as measured by recording signals on the video tape specimens by a video tape recorder (Matsushita Electric's "NV-3120") for open reels conforming to the EIAJ unified standards and then by reproducing the still images with a tension of 200 grams applied on the take-up side by a spring balancer.

As can be seen from the graph, the cross-linking of the binder by electron beams gives a coating film of a tough structure and markedly reduces the rate of signal attenuation, regardless of the rigorous abrasive condition with a relative velocity of the magnetic film and the head as high as 11 meters a second. On the other hand, Specimens #1, #A-1, and #A-2 lacked in flexibility of the coating films and showed serious signal attenuations under the severe abrasive addition of 11 m/sec.

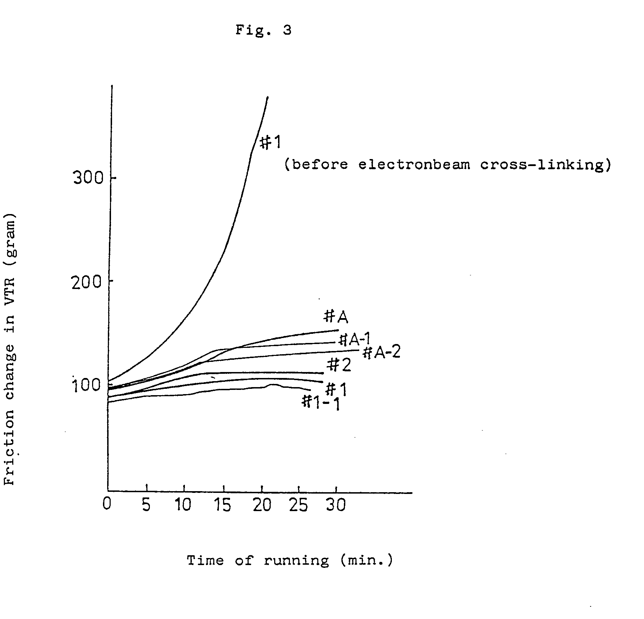

Fig. 3 is a graphic representation of changes in friction of test video tapes with running time. Each tape was held for five days under changing conditions in five cycles, each beginning with a temperature of −10°C and a relative humidity of 0% and ending with 60°C and 80%. After this period, the specimen was kept still at room temperature for 24 hours. The tape was then put on the same video tape recorder as used for the still reproduction test, a tension analyzer marketed by Japan Automatic Control Co., Model "IVA-500", was set between the head drum and the pinch roller of the recorder, and the changes in tension on the take-up side of the test tape with running time were measured.

This test permits evaluation of not only the friction coefficient level of the magnetic film itself of each test tape but also the degree of deterioration of tape running quality due to exudation of the low-molecular components from the magnetic film, and stability of the tape against the environmental conditions such as temperature and humidity.

As is obvious from the graph, the tapes #1 and #2 after the cross linking by electron-beam radiation exhibited low friction coefficients. With adequate cross linking of the low-molecular elastomer components, there was no exudation to the coating surface, and the tapes showed good running stability regardless of changes in temperature and humidity.

The #1 tape before the electron-beam cross linking, by contrast, indicated very poor running stability after the temperature cycles, although the exudation of the low-molecular elastomer components to the magnetic coating surface was responsible to some extent.

Specimen #A was found to be somewhat instable as compared with Specimens #1 and #2, und uniformity of cross linking by electron-beam radiation was confirmed.

Example 3

A composition consisting of

| | |
|---|---|
| Acicular magnetic powder of Fe alloy (major axis 0.3 µ, minor axis 0.04 µ, Hc 1100 Oe) | 120 parts |
| Dispersant (oleic acid) | 2 parts |
| Solvent (methyl ethyl ketone:toluene 50:50) | 100 parts |

12

is mixed by a powerful mixer for 3 hours, so that the fine particles of magnetic alloy are thorouhly wetted with the dispersant. Next, a mixture consisting of

| | |
|---|---|
| Resin composition (b) | 18 parts (on solids basis) |
| Resin composition (h) | 12 parts (on solids basis) |
| Solvent (methyl ethyl ketone:toluene 50:50) | 200 parts |
| Lubricant | 3 parts |

is mixed well and dissolved.

The resultant is fully mixed with the pretreated magnetic powder by a high speed mixer for 60 minutes and then mixed and dispersed by a sand grinding mill for a further period of 4 hours.

The magnetic coating material thus prepared was applied to a 12 µ-thick polyester film. After magnetic field orientation, solvent drying, and surface smoothening, the coating film was cured by exposure to electron-beam radiation in an $N_2$ gas atmosphere in an "Electro-curtain" type electron-beam accelerator at an acceleration voltage of 150 KeV with an electrode current of 10 mA to a total dosage of 5 mrads.

The tape so obtained was slitted into a ribbon 3.8 mm wide as an alloy audio cassette tape (Specimen #3).

Example 3-1 (using a thermoplastic resin, too)

The procedure of Example 3 was repeated with the exception that the binder was replaced by a mixture consisting of

| | |
|---|---|
| Vinyl chloride-vinyl acetate copolymer ("VAGH") | 3 parts |
| Resin composition (a) | 10 parts (on solids basis) |
| Resin composition (b) | 12 parts (on solids basis) |
| Diethylene glycol dimethacrylate | 5 parts |
| Solvent (methyl ethyl ketone:toluene 50:50) | 200 parts |
| Lubricant | 3 parts |

and, in the same manner as in Example 3, the coating film was cured and the resulting tape was slitted to obtain an alloy audio cassette tape (Specimen #3-1).

Comparative Example 3-1

In Example 3, the binder was replaced by a mixture consisting of

| | |
|---|---|
| Diethylene glycol dimethacrylate | 18 parts |
| Trimethylolpropane trimethacrylate | 12 parts |
| Solvent (methyl ethyl ketone:toluene 50:50) | 200 parts |
| Lubricant | 3 parts |

but otherwise in the same way as in Example 3 the coating film was cured and an alloy audio cassette tape (Specimen #B-1) was obtained.

Example 4

A composition consisting of

| | |
|---|---|
| Acicular magnetic particles of Fe alloy (major axis 0.3 µ, minor axis 0.04 µ, Hc 1100 Oe) | 120 parts |
| Dipersant (oleic acid) | 2 parts |
| Solvent (methyl ethyl ketone:toluene 50:50) | 100 parts |

13

is mixed by a powerful mixer for 3 hours, so that the fine magnetic alloy particles are thoroughly wetted with the dispersant. Next, a mixture consisting of

| | |
|---|---|
| Resin composition (f) | 13 parts (on solids basis) |
| Resin composition (h) | 12 parts (on solids basis) |
| 1,6-Hexaneglycol dimethacrylate as component with molecular weight of less than 400 | 5 parts |
| Solvent (methyl ethyl ketone:toluene 50:50) | 150 parts |
| Lubricant | 3 parts |

is thoroughly mixed and dissolved.

The resultant was fully mixed with the pretreated magnetic particles by a high speed mixer for 60 minutes, and the mixture was further mixed and dispersed by a sand grinding mill for 4 hours.

The magnetic coating material thus prepared was applied to a 12 μ-thick polyester film. After magnetic field orientation, solvent drying, and surface smoothening, the coating film was cured by exposure to electron-beam radiation in an $N_2$ gas atmosphere in an "Electron-curtain" type electron-beam accelerator at an acceleration voltage of 150 KeV with an electrode current of 10 mA to a total dosage of 5 mrads.

The tape so obtained was slitted into a ribbon 3.8 mm wide as an alloy audio cassette tape (Specimen #4).

Comparative Example 2

A composition consisting of

| | |
|---|---|
| Acicular magnetic particles of Fe alloy (major axis 0.3 μ, minor axis 0.04 μ, He 1100 Oe) | 120 parts |
| Dispersant (oleic acid) | 2 parts |
| Solvent (methyl ethyl ketone:toluene 50:50) | 100 parts |

is mixed by a powerful mixer for 3 hours, so that the fine magnetic alloy particles are thoroughly wetted with the dispersant. Next, as a binder a mixture of

| | |
|---|---|
| Acrylic double-bond-introduced vinyl chloride-vinyl acetate copolymer singly used as a resin having molecular weight of over 5000 | 30 parts (on solids basis) |
| Solvent (methyl ethyl ketone) | 200 parts |
| Lubricant (higher fatty acid-modified silicone oil) | 3 parts |

is mixed well and dissolved.

The resultant was fully mixed with the pretreated magnetic particles by a high speed mixer for 60 minutes, and the mixture was further mixed and dispersed for 4 hours by a sand grinding mill.

After the dispersion, 5 parts by weight, in terms of solids, of an isocyanate compound ("Desmodur L" made by Bayer AG) capable of cross-linking by a reaction with the functional groups composed mostly of the hydroxyl groups of the binder in the magnetic coating material was added to the coating composition already charged in the sand grinding mill, and the mixture was kneaded for 20 minutes.

The magnetic coating material so obtained was applied to a 15 μ-thick polyester film and the coated film was treated for magnetic field orientation, solvent drying, and surface smoothening, and then was held in a heat-treating oven at 80°C for 48 hours to effect thermal curing. The resulting tape was slitted into an alloy audio cassette tape (Specimen #B).

TABLE 1
Alloy audio cassette tape characteristics

| Specimen | Hc[1] (Oe) | Br[1] (G) | Surf. qlty. (dB)[2] | Electromag. conv. charac. (dB)[3] | | | Tape squeal[4] (hr) | Recipro. run durablty.[5] (No. of pass) | Aherence to base[6] (g) |
| | | | | Mol 333 Hz | Mol 8 KHz | Mol 6 KHz | | | |
|---|---|---|---|---|---|---|---|---|---|
| Examples of this invention: | | | | | | | | | |
| #3* | 1060 | 3200 | 12.5 | +3.2 | +6.0 | +11.0 | Over 24 | Over 150 | 40 |
| #3-1* | 1060 | 3200 | 12.5 | +3.2 | +6.0 | +11.0 | Over 24 | Over 150 | 50 |
| #4* | 1060 | 3200 | 12.5 | +3.2 | +6.0 | +11.0 | Over 24 | Over 150 | 50 |
| Comparative Examples; | | | | | | | | | |
| #B** | 1070 | 2600 | 7.0 | 0.0 | +3.0 | +5.0 | 17 | Stopped after 80 passes | 5 |
| #B-1*** | 1060 | 3200 | 12.5 | +3.2 | +6.0 | +11.0 | 15 | 70 | 5 |

Notes
*After electron-beam curing.
**Using a binder of only a resin with a molecular weight of 5000.
***After electron-beam curing.
[1]Measured by Toei Kogyo's orientation meter, Model "VSM-III", with the application of a magnetic field of 5000 G.
[2]The surface gloss value as measured on the basis of a reference glass plate which is set at zero decibel (dB).
[3]Determined with Nakamichi Research Institute's cassette deck, Model "Nakamichi 582", in the "Metal" position.
[4]Determined with Matsushita Communication Ind.'s car stereo set, Model "National CX-318", at 40°C and 80% RH.
[5]Determined with MCI's car stereo set, Model "National CX-1147D" at 40°C and 60% RH.
[6]Adherence or bonding strength as measured by stripping the coating away from a cellophane base.

Table 1 summarizes the characteristics of the alloy audio cassette tapes using binders according to the invention. When the resins of different molecular weights, i.e., the electron-beam-sensitive component having a molecular weight of not less than 5000, the electron-beam-sensitive component having a molecular weight of more than 400 and less than 5000, and the monomer having a molecular weight of less than 400, are blended with the electron-beam-reactive monomer as in the preceding examples, audio tapes of well-balanced characteristics are obtained. With good affinity of the binder for the alloy magnetic powder, excellent surface-forming ability is exhibited after the application, and extremely smooth surface with a high residual magnetic flux density can be obtained.

Thus, tapes of very high sensitivity over the MoL ranges from the low frequency of 333 Hz up to the high frequency of 16 KHz were obtained. As measures of reliability, the periods of running time the tapes took to begin squealing, the durability of the tapes with reciprocating travels from reel to reel past the head of a car stereo set, and the bonding strength or adhesion of the coatings to the polyester base were determined. It was confirmed that the alloy cassette tapes according to the invention which used the electron-beam-curable binders comprising the components of varied molecular weights possessed far greater running durability, reliability in adverse environments of high temperature, high humidity, etc., and better adherence to the base than the tapes of comparative examples.

On the other hand, when only a monomer having a molecular weight of less than 400 was employed as the binder (Specimen #B-1), it was found the binder gives a very smooth surface and high residual magnetic flux density but the resulting tape is inferior in the length of running time up to the tape squealing, reciprocating running durability, and adherence.

## Example 5

| | |
|---|---|
| $\gamma$-$Fe_2O_3$ (major axis 0.8 $\mu$, minor axis 0.2 $\mu$, Hc 300 Oe) | 120 parts |
| Carbon black (for antistatic use, "Mitsubishi Carbon Black MA-600" | 5 parts |
| $\alpha$-$Al_2O_3$ particles (0.5 $\mu$ in particle size) | 2 parts |
| Dispersant (sorbitan monooleate) | 3 parts |
| Solvent (methyl ethyl ketone:toluene 50:50) | 100 parts |

These components are mixed up by a ball mill for 3 hours, and the magnetic iron oxide is thoroughly wetted with the dispersant. Next,

| | |
|---|---|
| Resin composition (e) | 15 parts (on solids basis) |
| Resin composition (i) | 15 parts (on solids basis) |
| Solvent (methyl ethyl ketone:toluene 50:50) | 200 parts |
| Lubricant (fluorine oil, E.I. du Pont de Nemours' "Kritox") | 3 parts |

are mixed well and dissolved.

The resultant is placed into the ball mill where the magnetic powder has been treated in advance, and the two are again mixed and dispersed for 42 hours.

The magnetic coating material thus prepared was applied to one side of a 188 $\mu$-thick polyester film to form a coating film about 10 $\mu$ thick, and the coating was dried, and then the coated surface was smoothened. The coating film was cured by irradiation in an $N_2$ gas atmosphere by an "Electro-curtain" type electron-beam accelerator at an acceleration voltage of 175 KeV with an electrode current of 15 mA to a total dosage of 2 mrads.

A disk (about 65 mm in diameter) was blanked out of the resulting roll, and a magnetic disk was obtained. This specimen was numbered #5.

# 0 047 321

Comparative Example 3

A composition consisting of

| | |
|---|---|
| $\gamma$-$Fe_2O_3$ (major axis 0.8 μ, minor axis 0.2 μ, Hc 300 Oe) | 120 parts |
| Carbon black (for antistatic use, "Mitsubishi Carbon Black MA-600" | 5 parts |
| $\alpha$-$Al_2O_3$ (0.5 μ in particle size) | 2 parts |
| Dispersant (sorbitan monooleate) | 3 parts |
| Solvent (methyl ethyl ketone:toluene 50:50) | 100 parts |

is mixed up by a ball mill for 3 hours, and the magnetic iron oxide is thoroughly wetted with the dispersant. Next, a mixture of

| | |
|---|---|
| Resn composition (g) | 30 parts (on solids basis) |
| Solvent (methyl ethyl ketone:toluene 50:50) | 200 parts |
| Lubricant (du Pont's fluorine oil "Kritox") | 3 parts |

is mixed well and dissolved.

The resultant is placed into the ball mill were the magnetic powder has been treated in advance, and the two are again mixed and dispersed for 42 hours.

The magnetic coating material thus prepared was applied to one side of a 188 μ-thick polyester film to form a coating film about 10 μ thick, and the coating was dried, and then the coated surface was smoothened. The coating film was cured by irradiation in an $N_2$ gas atmosphere by an "Electro-curtain" type electron-beam accelerator at an acceleration voltage of 175 KeV with an electrode current of 15 mA to a total dosage of 2 mrads.

A disk (about 65 mm in diameter) was blanked out of the resulting roll, and a magnetic disk was obtained as Specimen #C.

Each test disk was set on a recorder-reproducer and was driven to run at a speed of about one meter per second in sliding contact with the magnetic head (at a pad pressure of 40 $g/cm^2$), and the time required for the dropouts to reach a cumulative total of 1000 was measured.

The results are given in Table 2.

TABLE 2

| Specimen | Running time | Surface condition | Deposit on head |
|---|---|---|---|
| #5 of Example | Over 100 hrs | No abnormality | No abnormality |
| #C of Comp. Example | Stopped after 2-hr run. | Seriously roughened in 2 hrs. | Foreign matter deposited. |

As will be understood from the table, the combined use of the two electron-sensitive binder components of different molecular weights, i.e., more than 5000, and more than 400 and less than 5000, makes the resulting magnetic coating film tough and suitable for floppy disks.

The tests on the specimen (#C) using the binder of only one resin having a molecular weight of less than 5000 and more than 400 indicated that the magnetic coating film is so brittle that it is rapidly scraped off by the head. Thus, the specimen on the comparative example was inferior to that of the example according to the invention.

17

**0 047 321**

Example 6

| | |
|---|---|
| γ-Fe$_2$O$_3$ (major axis 0.8 μ, minor axis 0.2 μ Hc 350 Oe) | 120 parts |
| Carbon black (for antistatic use, "Mitsubishi Carbon Black MA-600") | 5 parts |
| α-Al$_2$O$_3$ powder (0.5 μ in particle size) | 2 parts |
| Dispersant (sorbitan monooleate) | 3 parts |
| Solvent (methyl ethyl ketone:toluene 50:50) | 100 parts |

These components are mixed up by a ball mill for 3 hours, and the magnetic iron oxide is thoroughly wetted with the dispersant. Next,

| | |
|---|---|
| Resin composition (d) | 15 parts (on solids basis) |
| Resin composition (g) | 10 parts (on solids basis) |
| Diethylene glycol dimethacrylate as component having molecular weight of less than 400 | 5 parts |
| Solvent (methyl ethyl ketone:toluene 50:50) | 150 parts |
| Lubricant (fluorine oil, du Pont's "Kritox") | 2 parts |

are mixed well and dissolved.

The resultant is placed into the ball mill where the magnetic powder has already been treated, and the two are mixed and dispersed again for 42 hours.

The magnetic coating material thus prepared was applied to one side of a 75 μ-thick polyester film and dried. Next, the coated surface was smoothened to form a coating film about 2 μ thick. The coating film was hardened by irradiation in an N$_2$ gas atmosphere by an "Electro-curtain" type electron-beam accelerator at an acceleration voltage of 175 KeV with an electrode current of 15 mA to a total dosage of 2 mrads.

The resulting roll was cut into a predetermined size, and a sealless commutation ticket was blanked out of it. This ticket is designated Specimen #6.

Comparative Example 4

| | |
|---|---|
| γ-Fe$_2$O$_3$ (major axis 0.8 μ, minor axis 0.2 μ, Hc 350 Oe) | 120 parts |
| Carbon black (for antistatic use, "Mitsubishi Carbon Black MA-600") | 5 parts |
| α-Al$_2$O$_3$ powder (0.5 μ in particle size) | 2 parts |
| Dispersant (sorbitan monooleate) | 3 parts |
| Solvent (methyl ethyl ketone:toluene 50:50) | 100 parts |

These components are mixed up by a ball mill for 3 hours, so that the magnetic iron oxide particles are thoroughly wetted with the dispersant. Next, a mixture consisting of

| | |
|---|---|
| Resin composition (d) | 30 parts (on solids basis) |
| Solvent (methyl ethyl ketone:toluene 50:50) | 150 parts |
| Lubricant (fluorine oil, du Pont's "Kritox") | 3 parts |

is mixed well and dissolved.

18

# 0 047 321

The resultant is introduced into the ball mill where the magnetic powder has been treated in advance, and the two are again mixed and dispersed for 42 hours.

The magnetic coating material thus obtained was applied to one side of a 75 µ-thick polyester film and dried. The coated surface was smoothened so that the coating film was about 2 µ thick, and then was hardened by exposure to elecoron beams in an $N_2$ gas atmosphere by an "Electro-curtain" type electron-beam accelerator at an acceleration voltage of 175 KeV with an electrode current of 15 mA to a total dosage of 2 mrads.

The roll so obtained was cut into a predetermined size, and a sealless commutation ticket was blanked out of it as Specimen #D.

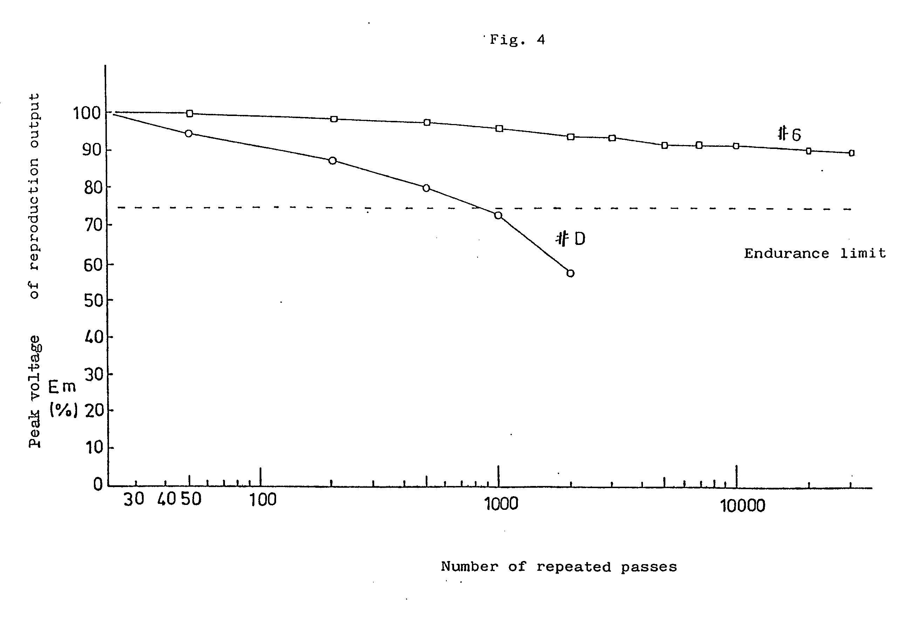

The specimens of Example 6 and Comparative Example 4 as sealless commutation tickets were tested for their gate passage endurance. The results are graphically shown in Fig. 4.

The curves represent the attenuation rates (in Em) of the peak voltages of the reproduction outputs after repeated passes through the gate, on the basis of the initial reproduction output peak voltage as 100%.

Usually, the point where the reproduction output peak voltage has dropped from the initial standard output voltage by more than 25% is judged to be the end of the ticket life.

As shown in the graph, the pulse signal peak voltage levels up to the maximum number of repeated passes of 30000 were observed.

As indicated in Fig. 4, it was confirmed that the combination of the compound having a molecular weight of not less than 5000 and the compound having a molecular weight of less than 5000 is remarkably helpful in minimizing the drop of the output relative to the frequency of reproduction.

Industrial applicability

As described hereinbefore, the magnetic recording medium according to the present invention has effective uses in varied forms, such as cassette tapes, open-reel tapes, video tapes, magnetic cards, and magnetic disks.

**Claims**

1. A magnetic coating composition for a magnetic recording medium, which consists sssentially of a binder, magnetic particles, and solvent, said binder comprising either a combination of

(A) 20—95 wt% of a compound containing at least two unsaturated double bonds curable upon exposure to radio-active rays and having a molecular weight of not less than 5000, preferably not less than 8000, and

(B) 5—80 wt% of a compound containing at least one radiation-curable unsaturated double bond and having a molecular weight of not less than 400 and less than 5000, preferably in the range of 600—3000, or a combination of the compounds (A), (B) and

(C) 0—50 wt% of a compound containing at least one radiation-curable, unsaturated double bond and having a molecular weight of less than 400.

2. A magnetic coating composition according to claim 1 wherein said compounds (A), (B) and (C) are contained in the ratios of 50—90 wt%, 10—50 wt% and 5—20 wt%, respectively.

3. A magnetic coating composition according to claim 1 or 2 wherein said compound (A) is one prepared by reacting a partly saponified vinyl chloride-vinyl acetate copolymer with a polyisocyanate compound and then reacting the resulting isocyanate-containing compound with an acrylic or methacrylic compound having a functional group reactive with the isocyanate group.

4. A magnetic coating composition according to claim 1, 2 or 3 wherein said compound (B) is one prepared by reacting a polyol with a polyisocyanate compound and then reacting the resulting isocyanate-containing compound with an acrylic or methacrylic compound having a functional group reactive with the isocyanate group.

5. A magnetic coating composition according to any of claims 1 to 4 wherein said binder further comprises a thermoplastic resin free of any radiation-curable, unsaturated double bond.

6. A magnetic recording medium according to any of claims 1 to 5 wherein said magnetic particles are those of at least one powder selected from among cobalt-modified magnetic iron oxide and alloy powders.

7. A process for producing a magnetic recording medium comprising a substrate and a magnetic recording layer formed thereon, which comprises applying a magnetic coating composition consisting essentially of a binder, magnetic particles, and solvent, predrying the coating layer, and then irradiating the same with radioactive rays, characterised in that said binder comprises either a combination of

(A) 20—95 wt% of a compound containing at least two unsaturated double bonds curable upon exposure to radioactive rays and having a molecular weight of not less than 5000, and preferably not less than 8000, and

(B) 5—80 wt% of a compound containing at least one radiation-curable, unsaturated double bond and having a molecular weight of not less than 400 and less than 5000, preferably in the range of 600—3000, or a combination of the compounds (A), (B) and

(C) 0—50 wt% of a compound containing at least one radiation-curable, unsaturated double bond and having molecular weight of less than 400.

19

8. A process according to claim 7, characterised in that the compound (A), (B) and (C) are contained in the ratios of 50—90 wt%, 10—50 wt% and 5—20 wt%, respectively.

9. A process according to claim 7 or 8, characterised in that said compound (A) is one prepared by reacting a partly saponified vinyl chloride-vinyl acetate copolymer with a polyisocyanate compound and then reacting the resulting isocyanate-containing compound with an acrylic or methacrylic compound having a functional group reactive with the isocyanate group.

10. A process according to claim 7, 8 or 9, characterised in that said compound (B) is one prepared by reacting a polyol with a polyisocyanate compound and the reacting the resulting isocyanate-containing compound with an acrylic or methacrylic compound having a functional group reactive with the isocyanate group.

11. A process according to any of claims 7 to 10, characterised in that said binder further comprises a thermoplastic resin free of any radiation-curable, unsaturated double bond.

12. A process according to any of claims 7 to 11, wherein said magnetic particles are those of at least one powder selected from among cobalt-modified magnetic iron oxide and alloy powders.

13. A process according to any of claims 7 to 12, wherein said irradiation with radioactive rays is carried out in an inert gas stream.

**Revendications**

1. Compositions de revêtement magnétique pour un milieu d'enregistrement magnétique, cette composition étant constituée essentiellement d'un agent liant, de particules magnétiques et d'un solvant, cet agent liant comprenant une combinaison de

(A) 20 à 95% en poids d'un composé contenant au moins deux doubles liaisons insaturées durcissables lors de l'exposition à des rayons radio-actifs, ce composé ayant un poids moléculaire de 5.000 minimum, de préférence, de 8.000 minimum, et

(B) 5—80% en poids d'un composé contenant au moins une double liaison insaturée durcissable par les radiations, ce composé ayant un poids moléculaire de 400 minimum et inférieur à 5.000, de préférence, un poids moléculaire se situant dans l'intervalle de 600 à 3.000, ou un combinaison des composés (A), (B) et

(C) 0—50% en poids d'un composé contenant au moins une double liaison insaturée durcissable par les radiations, ce composé ayant un poids moléculaire inférieur à 400.

2. Composition de revêtement magnétique selon la revendication 1, caractérisée en ce que les composés (A), (B) et (C) sont contenus dans les rapports de 50—90% en poids, 10—50% en poids et 5—20% en poids respectivement.

3. Composition de revêtement magnétique selon la revendication 1 ou 2, caractérisée en ce que le composé (A) est un composé préparé en faisant réagir un copolymère partiellement saponifié de chlorure de vinyle et d'acétate de vinyle avec un composé polyisocyanate, puis en faisant réagir le composé obtenu contenant un groupe isocyanate avec un composé acrylique ou méthacrylique comportant un groupe fonctionnel réagissant avec le groupe isocyanate.

4. Composition de revêtement magnétique selon la revendication 1, 2 ou 3, caractérisé en ce que le composé (B) est un composé préparé en faisant réagir un polyol avec un composé polyisocyanate, puis en faisant réagir le composé obtenu contenant un groupe isocyanate avec un composé acrylique ou méthacrylique comportant un groupe fonctionnel réagissant agec le groupe isocyanate.

5. Composition de revétement magnétique selon l'une quelconque des revendications 1 à 4, caractérisée en ce que l'agent liant comprend également une résine thermoplastique exempte de toute double liaison insaturée durcissable par les radiations.

6. Milieu d'enregistrement magnétique selon l'une quelconque des revendications 1 à 5, caractérisée en ce que les particules magnétiques sont celles d'au moins une poudre choisie parmi les poudres magnétiques d'alliages et d'oxyde de fer, modifiées par le cobalt.

7. Procédé de fabrication d'un milieu d'enregistrement magnétique comprenant un substrat et une couche d'enregistrement magnétique formée sur ce substrat, ce procédé comprenant les étapes consistant à appliquer une composition de revêtement magnétique constituée essentiellement d'un agent liant, de particules magnétiques et d'un solvant, sécher préalablement la couche de revêtement, puis irradier cette dernière avec des rayons radio-actifs, caractérisé en ce que l'agent liant comprend une combinaison de

(A) 20—95% en poids d'un composé contenant au moins deux doubles liaisons insaturées durcissables lors de l'exposition à des rayons radio-actifs, ce composé ayant un poids moléculaire de 5.000 minimum, de préférence, de 8.000 minimum, et

(B) 5—80% en poids d'un composé contenant au moins une double liaison insaturée durcissable par les radiations, ce composé ayant un poids moléculaire de 400 minimum et inférieur à 5.000, de préférence, un poids moléculaire se situant dans l'intervalle de 600 à 3.000, ou une combinaison des composés (A), (B) et

(C) 0—50% en poids d'un composé contenant au moins une double liaison insaturée durcissable par les radiations, ce composé ayant un poids moléculaire inférieur à 400.

8. Procédé selon la revendication 7, caractérisé en ce que les composés (A), (B) et (C) sont contenus dans les rapports de 50—90% en poids, 10—50% en poids et 5—20% en poids respectivement.

9. Procédé selon la revendication 7 ou 8, caractérisé en ce que le composé (A) est un composé préparé en faisant réagir un copolymère partiellement saponifié de chlorure de vinyle et d'acétate de vinyle avec un composé polyisocyanate, puis en faisant réagir le composé obtenu contenant un groupe isocyanate avec und composé acrylique ou méthacrylique comportant un groupe functionnel réagissant avec le groupe isocyanate.

10. Procédé selon la revendication 7, 8 ou 9, caractérisé en ce que le composé (B) est un composé préparé en faisant réagir un polyol avec un composé polyisocyanate, puis en faisant réagir le composé obtenu contenant un groupe isocyanate avec un composé acrylique ou méthacrylique comportant un groupe fonctionnel réagissant avec le groupe isocyanate.

11. Procédé selon l'une quelconque des revendications 7 à 10, caracterisé en ce que l'agent liant comprend également une résine thermoplastique exempte de toute double liaison insaturée durcissable par les radiations.

12. Procédé selon l'une quelconque des revendications 7 à 11, caractérisé en ce que les particules magnétiques sont celles d'au moins une poudre choisie parmi les poudres magnétiques d'alliages et d'oxyde de fer modifiées par le cobalt.

13. Procédé selon l'une quelconque des revendications 7 à 12, caractérisé en ce que l'irradiation par des rayons radio-actifs est effectuée dans un courant d'un gaz inerte.

## Patentansprüche

1. Magnetische Überzugszusammensetzung für ein magnetisches Aufzeichnungsmedium, die im wesentlichen aus einem Binder, magnetischen Teilchen und Lösungsmittel besteht, wobei der Binder entweder eine Kombination von

(A) 20 bis 95 Gew.-% einer Verbindung, die wenigstens zwei ungesättigte, nach radioaktiver Bestrahlung härtbare Doppelbindungen enthält und eine Molekulargewicht von nicht weniger als 5000, vorzugsweise nicht weniger als 8000 hat, und

(B) 5 bis 80 Gew.-% einer Verbindung, die wenigstens eine strahlungshärtbare ungesättigte Doppelbindung enthält und ein Molekulargewicht von nicht weniger als 400 und weniger als 5000, vorzugsweise im Bereich von 600 bis 3000, hat, oder eine Kombination der Verbindungen (A), (B) und

(C) 0 bis 50 Gew.-% einer Verbindung, die wenigstens eine strahlungshärtbare, ungesättigte Doppelbindung enthält und ein Molekulargewicht von weniger als 400 hat, umfaßt.

2. Magnetische Überzugszusammensetzung nach Anspruch 1, worin die Verbindungen (A), (B) und (C) in den Verhältnissen 50 bis 90 Gew.-%, 10 bis 50 Gew.-% bzw. 5 bis 20 Gew.-% enthalten sind.

3. Magnetische Überzugszusammensetzung nach Anspruch 1 oder 2, worin die Verbindung (A) eine durch Umsetzen eines teilweise verseiften Vinylchlorid-Vinylacetat-Copolymers mit einer Polyisocyanatverbindung und dann Umsetzen der anfallenden Isocyanat-haltigen Verbindung mit einer Acryl- oder Methacrylverbindung mit einer mit der Isocyanatgruppe reaktiven funktionellen Gruppe hergestellte ist.

4. Magnetische Überzugszusammensetzung nach Anspruch 1, 2 oder 3, worin die Verbindung (B) eine durch Umsetzen eines Polyols mit einer Polyisocyanatverbindung und dann Umsetzen der anfallenden Isocyanat-enthaltenden Verbindung mit einer Acryl- oder Methacrylverbindung mit einer mit der Isocyanatgruppe reaktiven funktionellen Gruppe hergestellte ist.

5. Magnetische Überzugszusammensetzung nach irgend einem der Ansprüche 1 bis 4, worin der Binder ferner ein von jeder strahlungshärtbaren ungesättigten Doppelbindung freies thermoplastisches Harz umfaßt.

6. Magnetisches Aufzeichnungsmedium nach irgend einem der Ansprüche 1 bis 5, worin die magnetischen Teilchen solche zumindest eines Pulvers, ausgewählt unter Kobalt-modifizierten magnetischen Eisenoxid- und Legierungspulvern, sind.

7. Verfahren zur Herstellung eines magnetischen Aufzeichnungsmediums, umfassend ein Substrat und eine darauf gebildete magnetische Aufzeichnungsschicht, da das Aufbringen einer magnetischen Überzugszusammensetzung, bestehend im wesentlichen aus einem Binder, magnetischen Teilchen und Lösungsmittel, Vortrocknen der Überzugsschicht und dann Bestrahlen derselben mit radioaktiven Strahlen umfaßt, dadurch gekennzeichnet, daß der Binder entweder eine Kombination von

(A) 20 bis 95 Gew.-% einer Verbindung, die wenigstens zwei ungesättigte, nach radioaktiver Bestrahlung härtbare Doppelbindungen enthält und ein Molekulargewicht von nicht weniger als 5000, vorzugsweise nicht weniger als 8000 hat, und

(B) 5 bis 80 Gew.-% einer Verbindung, die wenigstens eine strahlungshärtbare ungesättigte Doppelbindung enthält und ein Molekulargewicht von nicht weniger als 400 und weniger als 5000, vorzugsweise im Bereich von 600 bis 3000, hat, oder eine Kombination der Verbindung (A), (B) und

(C) 0 bis 50 Gew.-% einer Verbindung, die wenigstens eine strahlungshärtbare, ungesättigte Doppelbindung enthält und ein Molekulargewicht von weniger als 400 hat, umfaßt.

8. Verfahren nach Anspruch 7, dadurch gekennzeichnet, daß die Verbindung (A), (B) und (C) in den Verhältnissen 50 bis 90 Gew.-%, 10 bis 50 Gew.-%. 5 bis 20 Gew.-% enthalten sind.

9. Verfahren nach Anspruch 7 oder 8, dadurch gekennzeichnet, daß die Verbindung (A) eine durch Umsetzen eines teilweise verseiften Vinylchlorid-Vinylacetat-Copolymers mit einer Polyisocyanatverbindung und dann Umsetzen der anfallenden Isocyanat-haltigen Verbindung mit einer Acryl- oder Methacrylverbindung mit einer mit der Isocyanatgruppe reaktiven funktionellen Gruppen hergestellte ist.

10. Verfahren nach Anspruch 7, 8 oder 9, dadurch gekennzeichnet, daß die Verbindung (B) eine durch Umsetzen eines Polyols mit einer Polyisocyanatverbindung und dann Umsetzen der anfallenden Isocyanat-haltigen Verbindung mit einer Acryl- oder Methacrylverbindung mit einer mit der Isocyanatgruppe reaktiven funktionellen Gruppe hergestellte ist.

11. Verfahren nach irgend einem der Ansprüche 7 bis 10, dadurch gekennzeichnet, daß der Binder ferner ein von irgend einer strahlungshärtbaren ungesättigten Doppelbindung freies thermoplastisches Harz umfaßt.

12. Verfahren nach irgend einem der Ansprüche 7 bis 11, worin die magnetischen Teilchen solche von wenigstens einem Pulver, ausgewählt unter Kobalt-modifizierten magnetischen Eisenoxid- und Legierungspulvern, sind.

13. Verfahren nach irgend einem der Ansprüche 7 bis 12, worin die Bestrahlung mit radioaktiven Strahlen in einem inerten Gasstrom durchgeführt wird.

Fig. 1

Lapse of time after the application of
magnetic coating material until the surface
treatment (holding time)

Fig. 2

(before electronbeam cross-linking)

Time (min.)

2

Fig. 3

Fig. 4

Endurance limit

Number of repeated passes

0 047 321